# EUROPEAN PATENT APPLICATION

(11) **EP 2 037 681 A1**
(43) Date of publication of application: **18.03.2009**
(21) Application number: 07291090.4
(22) Date of filing: 11.09.2007
(51) Int. Cl.: H04N 7/173

(54) **Method for delivering media streams from a distant service provider to a subscriber's media terminal**

(71) Applicant: Alcatel Lucent, 75008 Paris (FR)
(72) Inventor: Mobasser, Bahman, 78310 Maurepas (FR)
(74) Representative: Sayettat, Julien Christian

(57) **Abstract**

Method for delivering media streams from a distant service provider to a subscriber's media terminal (5), wherein media streams are ranked as regards the individual subscriber's demand probability and at least some of the most demanded streams (4a, 4b) are transferred from the distant service provider to subscriber storage means (3) ahead of program schedule; said method provides for the checking if the requested streams are stored in the subscriber storage means (3), if so it delivers the stream (6) from said means, and if the requested streams are not stored in said means, it delivers the stream from the distant service provider.

## Description

The invention relates to a method for delivering media streams from a distant service provider to a subscriber's media terminal, and a network for such delivery.

Movies and TV video are, in most cases, available ahead of the announced schedule. This is certainly true of all movies, but also true of most TV programs, where only news and weather can be regarded as live. In fact even the TV news content is mostly made up of video clips available from various sources hours or minutes before the actual transmission.

IPTV can therefore be presented as:
- Contents being deposited into server archives, through secure and error protected TCP/IP Protocol files, said contents being transferred to network side disc archives, and,
- Real-time on demand delivering from the distant disc archives to the subscribers set-top box ("STB") player which decodes signals in order to provide high-definition TV, using error prone UDP/IP Protocol.

IP networks, like all packet networks, are used optimally when traffic is spread around and statistical multiplexing is allowed to create an auto-adaptive traffic model. However, real-time delivery of movies and TV creates exactly the opposite model.

Indeed, real-time delivery of video contents using streamed IP represents a critical demand on network resources (bandwidth, QoS, and overall core and access network dimensioning). That system lacks logic from a functional point of view and puts tremendous demand on network resources, for both fixed and mobile video services.

Those problems will grow progressively more difficult as the demand for higher definition video combined with high compression codecs grows. This combination will lead to large streams with low error tolerance.

There has been some experimentation with "trickle download" of video content by some service providers. However, there are currently no existing systems enabling to combine various technologies into a single transparent service delivery mechanism and limiting excessive bandwidth consumption as regards IPTV contents delivery.

The purpose of the invention is to resolve the problems of the prior art by proposing, in particular, a method for delivering media streams from a distant service provider to a subscriber's media terminal in which most demanded streams could be stored in subscriber's storage means ahead of schedule, the invention thus limiting the streaming to that between the subscriber storage means and the subscriber's media terminal.

For that purpose and according to a first aspect, the invention relates to a method for delivering media streams from a distant service provider to a subscriber's media terminal, wherein:
- media streams are ranked as regards the individual subscriber's demand probability,
- at least some of the most demanded streams are transferred from the distant service provider to subscriber storage means ahead of program schedule,
said method provides for the checking if the requested streams are stored in the subscriber storage means, if so it delivers the media streams from said means, and if the requested streams are not stored in said means, it delivers the stream from the distant service provider.

According to a second aspect, the invention relates to a network for delivering media streams from a distant service provider to a subscriber's media terminal, said network comprising:
- means for ranking media streams as regards the subscriber's demand probability,
- subscriber storage means to which is connected the media terminal, some of the most demanded media streams can be stored from the service provider to the subscriber storage means,
- means for checking if the streams requested by the subscriber are stored in the subscriber storage means.

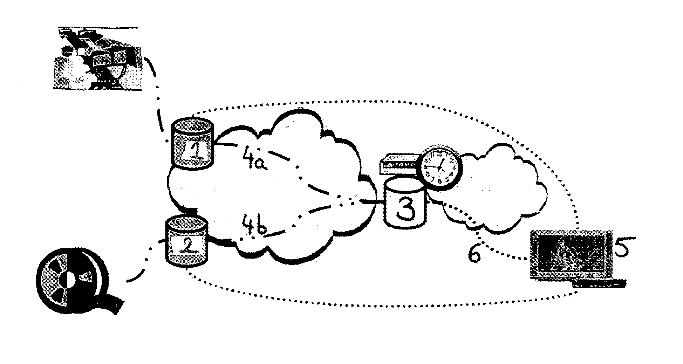

Other aspects and advantages will become apparent in the following description made with reference to the appended figure that illustrates the carrying out of the method according to an embodiment of the invention.

Video productions and archive movies are stored into IPTV network archives 1, 2 of a distant service provider. The distant service provider comprises means for ranking media streams as regards the subscriber's demand probability.

Said subscriber's demand probability of the media streams is based on general statistics or viewing patterns of the media terminal subscriber. General statistics refer to the popularity of the programs and the viewing patterns refer to the subscriber's indicated preferences and observed viewing habits, based on programs which have already been requested by the subscriber in the past.

The operation of ranking the media streams notably on the basis of videos which have been previously requested by the subscriber is referred to as forward caching.

On the basis of that ranking, at least some of the most demanded streams 4a, 4b are transferred from the distant service provider to subscriber storage means 3, ahead of program schedules. The choice of which programs to transfer into local storage is based on available storage capacity in the local storage and the demand probability.

The media streams 4a, 4b are respectively transferred from the network archives 1, 2 of the distant service provider to the subscriber storage means 3 using TCP/IP. Said Protocol allows error detection and selective packet repetition for error correction. TCP/IP Protocol also automatically adapts its bandwidth demand to the network capacity. Indeed, for example, the transfer rate is reduced if congestion of the network is detected and slowly increases again to detect and adapt to increased availability.

In addition to using TCP/IP, the network operator sets the bandwidth priority of media stream 4a, 4b transfer from network archive storage 1, 2 to the subscriber storage means 3 to be lower than other subscriber services, in order not to interfere with them. In this way the deliveries occur in the background, with minimal impact on other services.

The transfer is made to subscriber storage means 3. Those subscriber storage means 3 are implemented in RGW or STB devices.

RGW or "Residential Gateways" are devices that connect either multiple computers in the home to a single Internet connection or all internal home networks (telephone, LAN, cable TV, etc.) to their external counterparts.

The storage of the media streams 4a, 4b in the subscriber storage means 3 is regulated by the capacity of said means. However, the invention is made possible thanks to the widespread existence of large storage in the RGW or STB devices.

Thanks to optimal use of forward caching parameters, most of the media streams are available in the subscriber storage means 3 ahead of the subscriber's requests. Consequently, those storage means 3 can be considered as a virtual extension of the network archive storage 1, 2.

The media streams 4a, 4b transferred to subscriber storage means 3 remain blocked and inaccessible, and that as long as they are stored in said means.

Furthermore, the media streams 4a, 4b stored in the subscriber storage means 3 remain under DRM (Digital Rights Management) control until delivering of said streams is made to the media terminal 5, or more precisely until delivering is authorized at the level of the distant service provider.

The subscriber's media terminal 5 is connected to the distant service provider through RGW or STB devices.

The media stream 6 is delivered from the subscriber storage means 3 to the media terminal 5 upon the arrival of program schedule or upon the subscriber's request.

In case of request from the subscriber, said request is sent to the subscriber storage means 3 of the RGW or STB devices.

Within the RGW or STB devices are means for checking if the media streams requested by the subscriber are stored in the subscriber storage means 3. If already available, the RGW or STB devices locally deliver the media streams 6 to the requesting media terminal 5. The media stream 4 is delivered from the subscriber storage means 3 to the media terminal using UDP/IP.

If the requested streams are not already stored in the subscriber storage means 3, the media streams are delivered from the distant service provider to the media terminal 5. Indeed, in that second case, the media stream delivering falls back on the classic system of network stream delivery using UDP/IP from the distant service provider.

The method according to this invention is transparent for the media terminal subscriber.

The above mentioned method is identically applicable to mobile media terminals. Indeed, even though mobile media terminals are not connected to RGW devices, the subscriber handset is technically and commercially equivalent to RGW devices. Indeed, said handset has flash storage capacity capable of storing many hours of video content.

## Claims

1. Method for delivering media streams from a distant service provider to a subscriber's media terminal (5), wherein:
- media streams are ranked as regards the individual subscriber's demand probability,
- at least some of the most demanded streams (4a, 4b) are transferred from the distant service provider to subscriber storage means (3) ahead of program schedule,
said method provides for the checking if the requested streams are stored in the subscriber storage means (3), if so it delivers the media streams (6) from said means, and if the requested streams are not stored in said means, it delivers the stream from the distant service provider.

2. Method of claim 1, **characterized in that** the subscriber's media terminal (5) is connected to the distant service provider through RGW or STB devices, the subscriber storage means (3) being implemented in said RGW or STB devices.

3. Method of claim 2, **characterized in that** the storage of the media streams (4a, 4b) in the subscriber storage means (3) is regulated by the capacity of said means.

4. Method of claim 1 to 3, **characterized in that** the media streams (4a, 4b) stored in the subscriber storage means (3) remain under DRM control until delivering of said streams is made to the media terminal (5).

5. Method of claim 1 to 4, **characterized in that** the media streams (4a, 4b) are transferred from the distant service provider to subscriber storage means (3) using TCP/IP and the media stream (6) is delivered from the subscriber storage means (3) to the media terminal (5) using UDP/IP.

6. Method of claim 1 to 5, **characterized in that** the media stream (6) is delivered from the subscriber storage means (3) to the media terminal (5) at the arrival of schedule or upon the subscriber's request.

7. Method of claim 1 to 6, **characterized in that** the subscriber's demand probability of the media streams is based on general statistics or viewing patterns of the media terminal subscriber.

8. Network for delivering media streams from a distant service provider to a subscriber's media terminal (5), said network comprising:
- means for ranking media streams as regards the subscriber's demand probability,
- subscriber storage means (3) to which is connected the media terminal (5), some of the most demanded media streams can be stored from the distant service provider to the subscriber storage means (3),
- means for checking if the streams requested by the subscriber are stored in the subscriber storage means (3).

9. Network **characterized in that** the subscriber storage means (3) and the means for checking the storage of the streams are implemented in a RGW or STB devices connecting the distant service provider to the subscriber's media terminal (5).
